**Europäisches Patentamt**

**European Patent Office**

**Office européen des brevets**

(19)

(11) Publication number: **0 185 513**
**A1**

(12)

# EUROPEAN PATENT APPLICATION

(21) Application number: **85309035.5**

(22) Date of filing: **12.12.85**

(51) Int. Cl.⁴: **A 01 D 34/00**
**A 01 D 34/63, A 01 D 34/68**

(30) Priority: **12.12.84 AU 8535/84**
**26.07.85 AU 1666/85**

(43) Date of publication of application:
**25.06.86 Bulletin 86/26**

(84) Designated Contracting States:
**AT BE CH DE FR GB IT LI LU NL SE**

(71) Applicant: **Forrest, Francis Richard**
**19 Channel Street**
**Mornington Victoria 3192(AU)**

(72) Inventor: **Forrest, Francis Richard**
**19 Channel Street**
**Mornington Victoria 3192(AU)**

(74) Representative: **Frost, Dennis Thomas et al,**
**WITHERS & ROGERS 4 Dyer's Buildings Holborn**
**London, EC1N 2JT(GB)**

(54) Mowers.

(57) Mower of the self-propelled type having a control means (45) whereby the operator can effect the control of the movement of the mower, the control means being biassed (93) to a neutral or non-operative condition whereby, if the operator releases the control means, the drive of the mower is rendered inoperative.

The invention includes both walk-behind and ride-on mowers and I may provide a servo mechanism (261) between the part (241) of the control means actuated by the operator and that (270) which actuates the drive.

EP 0 185 513 A1

FIG. 1

FIG. 8

- 1 -

0185513

MOWERS

This invention relates to improvements in mowers and, in particular, to improvements in ride-on and walk behind mowers of the self-propelled type which may be used for industrial or domestic purposes.

The invention has several objects, the first of which is to ensure that, if the operator removes his hands from the controls, the drive of the mower is disconnected so that the mower ceases its operation and there can be no damage either to persons or property because a mower has "run away".

A second object is to provide a mower in which the height adjustment of the cutting table is arranged in such a way that the drive centres between the motor and the cutters remains constant, notwithstanding the height of the table.

A third aspect is to provide a mower having a delivery chute which is automatically released from its position on the mower should the chute strike any obstruction.

In the first aspect, the invention includes a mower of the self propelled type having a control means whereby the operator can effect the control of the movement of the mower characterised in that the control means is biassed to a neutral, or non-operative condition whereby, if the operator releases the control means, the drive of the mower is rendered inoperative.

In a specific form of the invention, there is provided an operating handle located at a position easily reached by an operator, which handle has at least one mode of operation whereby, on displacement of the handle, drive of the mower is initiated, the handle being biassed so that, when it is released, the drive is removed.

Preferably the handle has two modes, one being to cause the mower to move forwardly, the other being to cause the mower to reverse, the modes being selected by different displacements of the handle, the arrangement being that, regardless of which mode is used, the handle is biassed so that, when it is released, the drive is removed.

The invention is also applicable to an arrangement wherein there is separate drive to, say, each of two wheels so that, by selective operation of control handles, so the mower can be steered. Again, in this application, the release of either control handle causes the appropriate drive to be removed.

I prefer, in a specific form of the invention, to provide means whereby the rate of operation of the control of the mower can be varied and this is achieved by the use of a servo system interposed between the control handles and the motor control.

In the second aspect of the invention I provide a delivery chute which is pivotally mounted to the frame of the mower, the chute being moveable along the axes of the pivot(s) so as to be removeable after a predetermined movement, resilient means being provided to normally retain the chute on the mover but which means can be displaced for removal thereof.

I may prefer to provide lock means whereby the chute can be moved to, and retained in, a transport position at which it does not occlude the outlet from the mower.

In a third aspect of the invention I provide means whereby the drive spacing between the motor and the cutting deck of the mower is held constant regardless of the cutting deck height which comprises mounting the cutting deck on guides which are at an angle to the vertical through the mower body, the angle being, over its length, such as to cause the drive connection on the cutting deck to move over an approximate of an arc centred on the motor drive connection.

The drive connections may be pulleys or gears and the effective arc of movement is between the axis of the motor pulley and the cutting deck pulley.

In order that the invention may be more readily understood, I shall describe various aspects of the invention in relation to the accompanying drawings which relate to a walk-behind mower, a substantially heavy commercial type of ride-on mower, an alternative form of ride-on mower of a similar type and a lighter weight ride-on mower.

In these drawings:-

    Fig. 1    is a perspective view of the general arrangement of a walk-behind mower;

Fig. 2      is a plan view, partly broken away, of the mower of Fig. 1;

Fig. 3      is a partial sectional side elevation showing the general arrangement of the control handle and how its movement is transmitted to the control;

Fig. 4      is a view along line 4-4 of Fig. 3 showing the self centering arrangement which controls the forward and rearward movement of the mower;

Fig. 5      is a side elevation showing the general arrangement of the drive means for the mower rotor;

Fig. 6      is a side elevation showing the means of adjustment of the height of cut of the mower;

Fig. 7      is a front perspective view of a ride-on mower which incorporates the invention;

Fig. 8      is a longitudinal section through the mower of Fig. 7 and which shows the drive control to each of the drive motors;

Fig. 9      is a sectional plan view of the mower;

Fig. 10     is a sectional side elevation of an alternative form of mower;

Figs. 11    12 and 13 show a preferred form of discharge chute which has means whereby the chute can be located in a towing position and also showing means whereby the chute can be disengaged on striking an obstruction;  and

Fig. 14     is a side elevational view of a different type of mower having certain of the features of the invention.

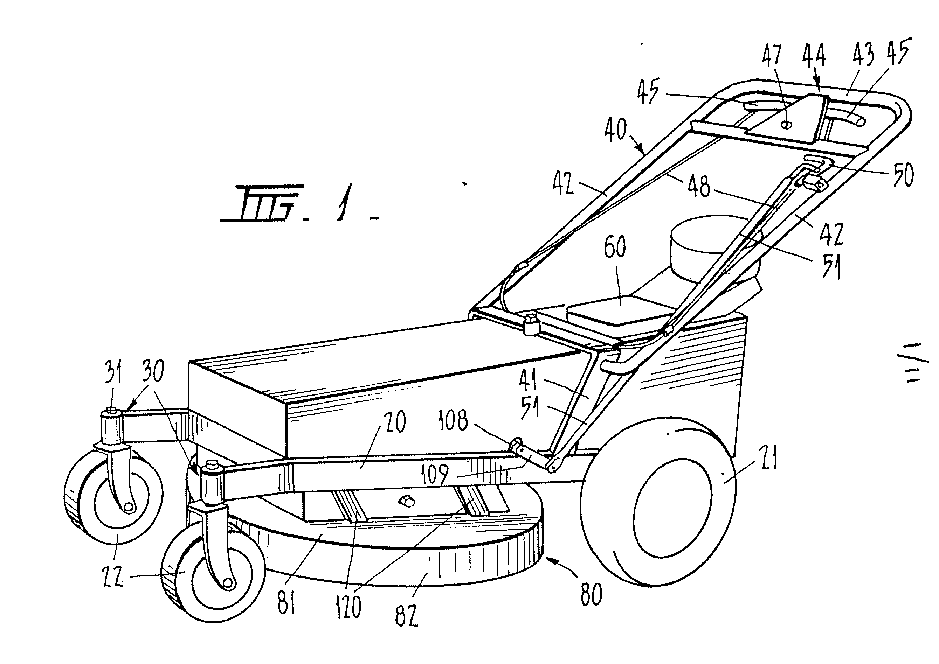

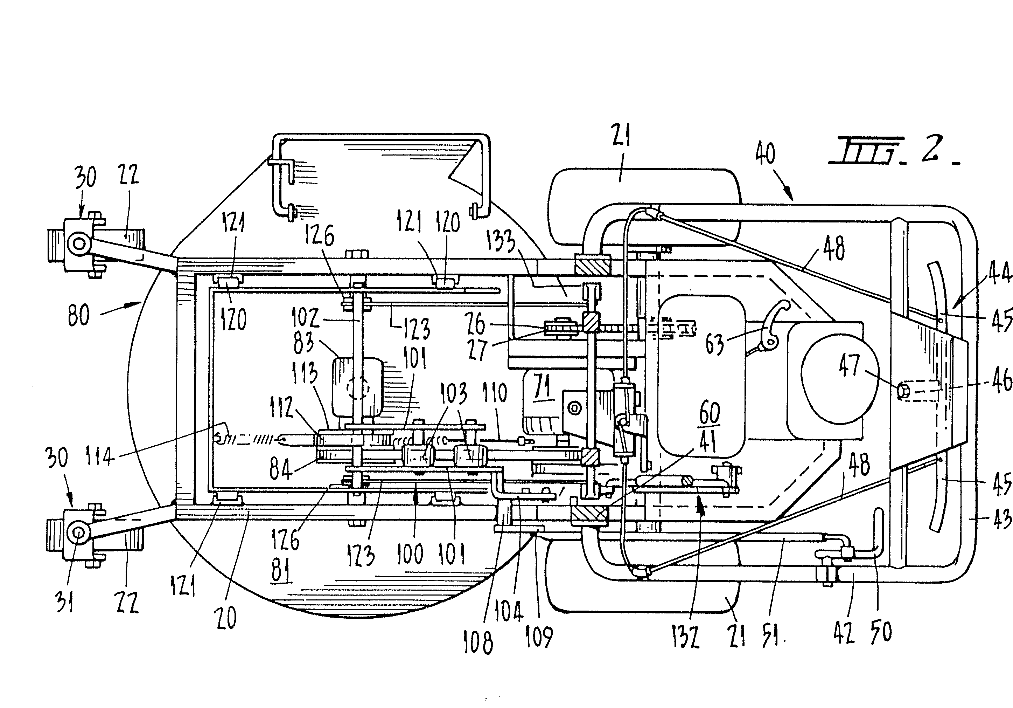

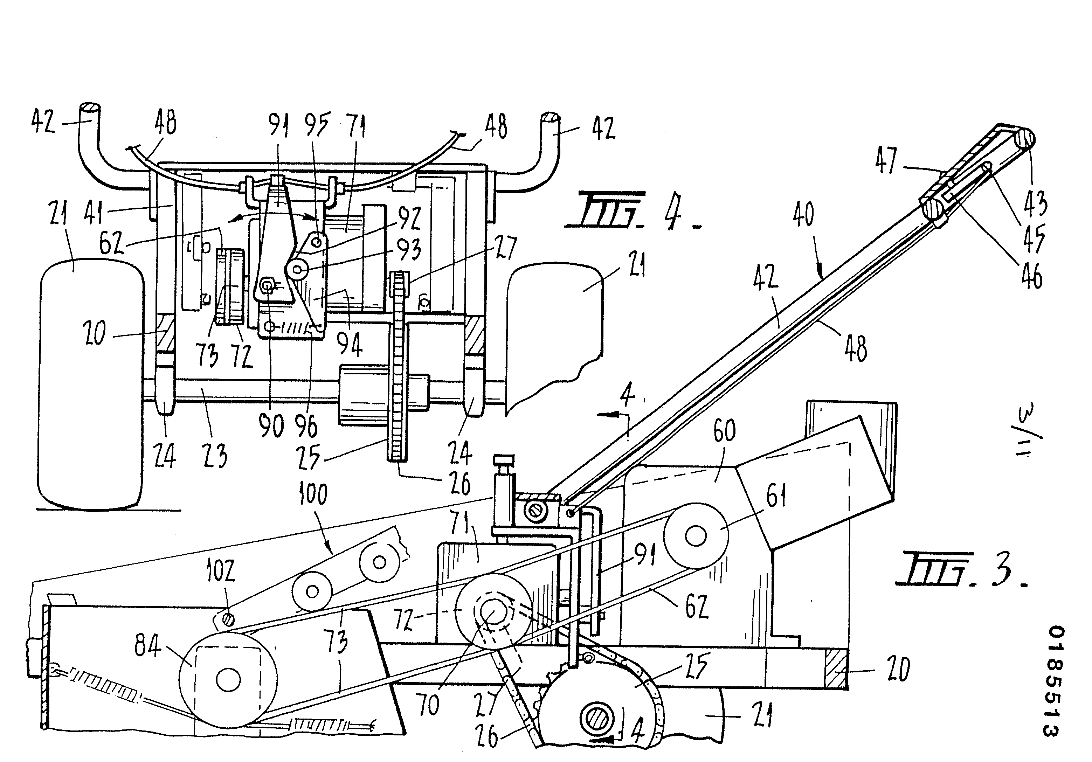

In the embodiment of Figs. 1 to 6 there is a basic frame 20 to which there is mounted two driven rear wheels 21 and two non-driven front wheels 22.

Preferably the rear wheels 21 are interconnected by a solid axle 23 which is journalled to the frame 20 by means of bearings located in plummer blocks 24 or the like.

Mounted on the axle 23 there is a gear 25 which is adapted to receive a drive chain 26 which is, in turn, connected to a spur gear 27 which is driven by an hydraulic motor 71.

The front wheels 22 are preferably mounted in a caster assembly 30 whereby these wheels can readily rotate about a substantially vertical axis 31 to permit steering of the mower.

It may be preferred that means be provided whereby these wheels can be locked to assist in control on difficult terrain.

A handle assembly 40 is connected to extensions 41 from the frame and basically comprises two arms 42 which are connected by a handle 43 which handle carries the control means 44 whereby the forward and reverse movement of the mower can be obtained.

As can best be seen from Fig. 2, the control means 44 may include a member 45 which lays substantially parallel to the handle 43 and is provided with a forwardly directed member 46 which is pivotally mounted at 47 so that either side of the control means member 45 can be drawn towards the handle 43.

Connected to either side of the control means member 45 there is a cable 48 which cables are used to control the forward movement of the mower.

Pivotally connected to one of the arms 42 there is a handle 50 which is connected to a rod or the like 51 whereby the engagement and disengagement of the mower plate can be readily effected. This will be described further herein.

The mower has, mounted on the frame 20, a motor 60 which is shown schematically, which motor has an output pulley 61 which may be connected by a belt 62 to the input shaft 70 of a hydraulic motor 71 and, on this shaft, there is a second pulley 72 to which there is connected a belt 73 which drives the mower plate, as will hereinafter be described.

The motor 60 may be provided with a throttle 63 and may either be provided with a self starter or be a pull start motor.

Normally, when the mower is operating, this motor is designed to operate at relatively constant revolutions so it is not necessary that the throttle 63 be located on or adjacent the handle 43 for constant manipulation by the user.

Mounted on the frame 20 there is a cutting deck 80 which has a cylindrical upper surface 81 and a peripheral skirt 82.

Located within the cutting deck, although not illustrated, there is a plate carrying cutting blades or cutting blades mounted on a shaft as is known in the art.

The axial shaft of the plate or the shaft to which the blades are connected passes through the deck 81 and is preferably an output shaft of a gear box 83, the input of which has a pulley 84 which is driven by the belt 73 previously referred to.

By providing an arrangement of this type using a gear box 83, it is possible to arrange that the plate or blades spin at a requisite, relatively high speed whilst using a motor speed which is sufficiently low to effectively operate the hydraulic motor 71.

Thus the output of the hydraulic motor 71 can be arranged to drive the mower at a reasonable walking speed, which can be selected by the user, whilst the peripheral speed of the blades of the mower is sufficiently great to effect a good cutting action.

The mower of the invention has a particularly effective drive control.

As previously mentioned, the member 45 can be moved relative to the handle 43 and this movement, about pivot 47, causes the cables 48 to move.

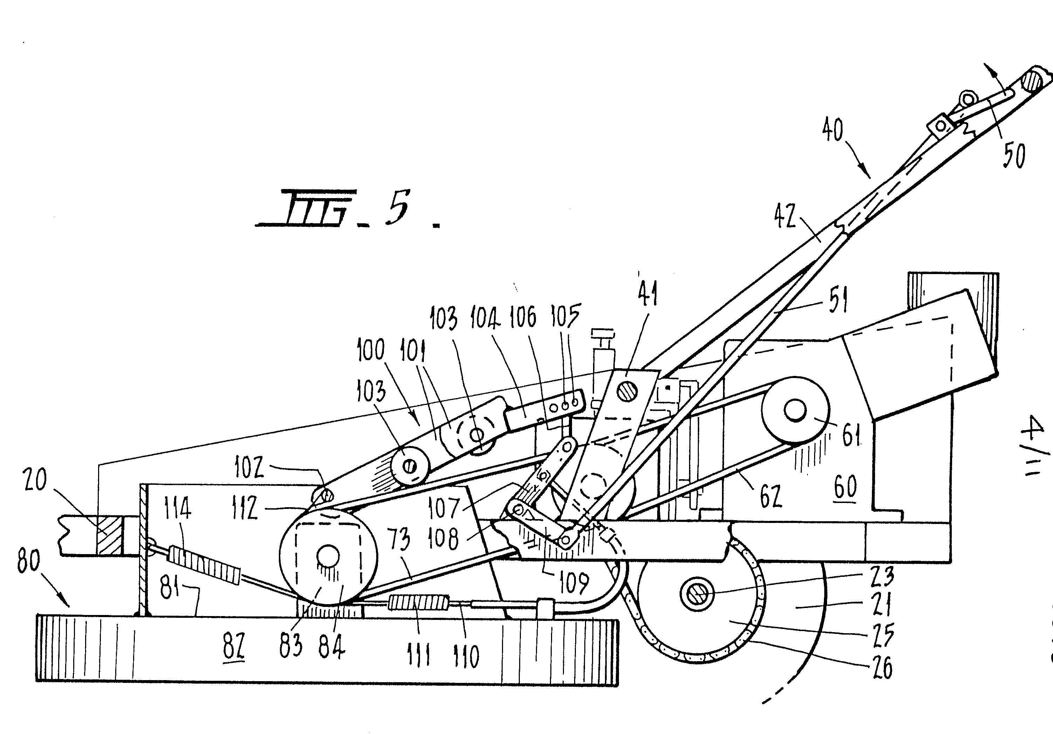

Referring to Fig. 4, the hydraulic motor 71 can be controlled by the rotation of a rod or shaft 90 which is in connection with a plate 91 which, in turn, is in connection with the cable 48, the arrangement being such that, when either end of the member 45 is moved towards the handle 43, then effectively the cable 48 moves towards the end moved and the plate 91 is displaced from its normal position.

This movement is illustrated by the arrow on the plate in Fig. 4.

The arrangement is such that, as the plate 91 is displaced from its central position, so the hydraulic motor 71 is caused to operate in one or the other sense, and this operation is, of course, reflected by the movement of the spur gear 27 which causes forward or rearward movement of the wheels 21.

Whilst a simple arrangement whereby the plate 91 was caused to move in one direction or the other direction would be all that is required for the mower to work, it is a desirable feature that, when a user releases the member 44, then the forward or rearward movement of the mower stops automatically.

It can be appreciated that a user using a mower of this type may, for example, slip or otherwise be caused to release the mower and it would be most undesirable that the mower could, then, be permitted to continue to move freely.

In order to provide this feature, it will be seen that the plate 91 has a V-shaped cutout 92 and I provide a roller 93 which is mounted on a plate 94 which itself is pivotally mounted about pivot 95 to act in the V-shaped groove 92.

The plate 94 is biassed towards the plate 91 by means of bias spring 96.

Thus, it will be seen that the potential energy in the spring 96 is least when the plate 94 is in a clockwise position, that is when it rests in the base of the groove 92.

It will be seen that, when the member 44 is caused to move, this causes an equivalent movement in plate 91 which firstly permits the shaft 90 to open a valve arrangement whereby the motor 71 is driven in one direction and, also, the roller 93 is caused to move up part of the V-shaped groove 92 against the tension in the spring 96.

Thus, there is a returning force acting on the plate 91 as long as this condition prevails and, should the member 44 be released, this force will tend to move plate 91 back to its rest position, shown in Fig. 4 which will, in turn, cut off the outlet of the hydraulic motor 71.

Thus it will be seen that simply by pulling on one side or the other of the member 44, so the plate 91 will cause the shaft 90 to rotate and the motor to operate either in a forward or rearward sense, depending on which side of the member is moved rearwardly but, when the user releases the member, then the plate 94 adopts a rest position, as illustrated in Fig. 4 where there is neither any forward or rearward movement of the mower.

This arrangement thus, very simply, gives a great safety feature to the mower of the invention.

Whilst the control means is shown as being used with an hydraulic motor 71, and this is a most effective area of use, it will be appreciated that the same concept can also be applied to other forms of transmission, such as a mechanical transmission.

In one particular type of such transmission there may be a cone clutch and means similar to that shown in Fig. 4 could be provided to ensure that, when the handle 44 is released, then the transmission immediately returns to its central, non-operative condition.

Should it be so required, I can provide means whereby the tension in the spring 96 can be varied so that more or less positive control of the arrangement of the plate 91 can be obtained.

Another aspect of the invention of importance lies in the mounting of the cutting deck 81.

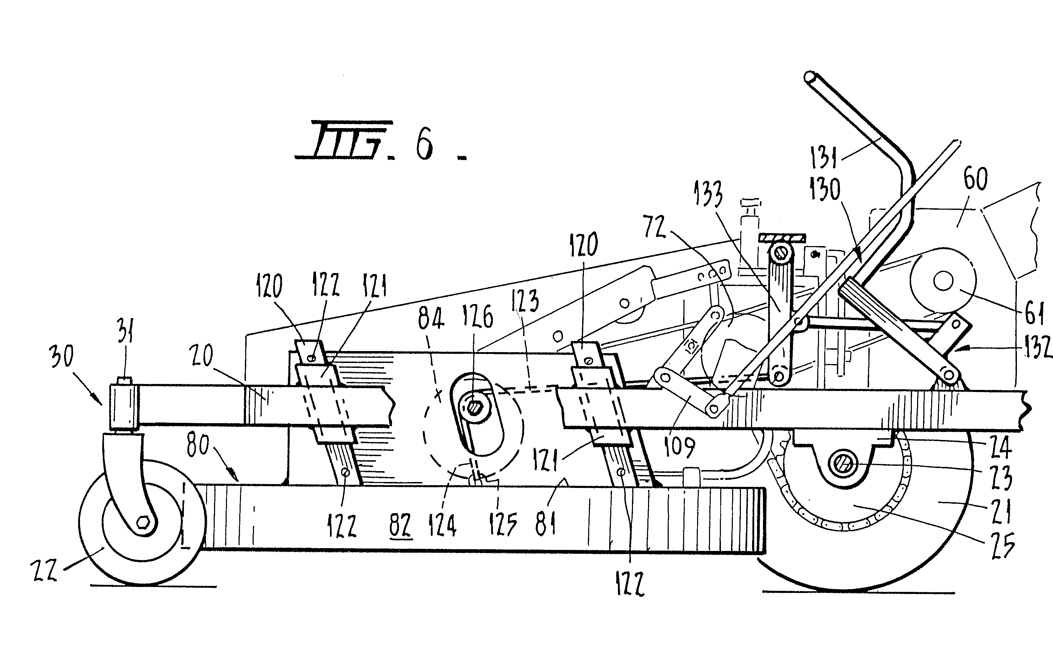

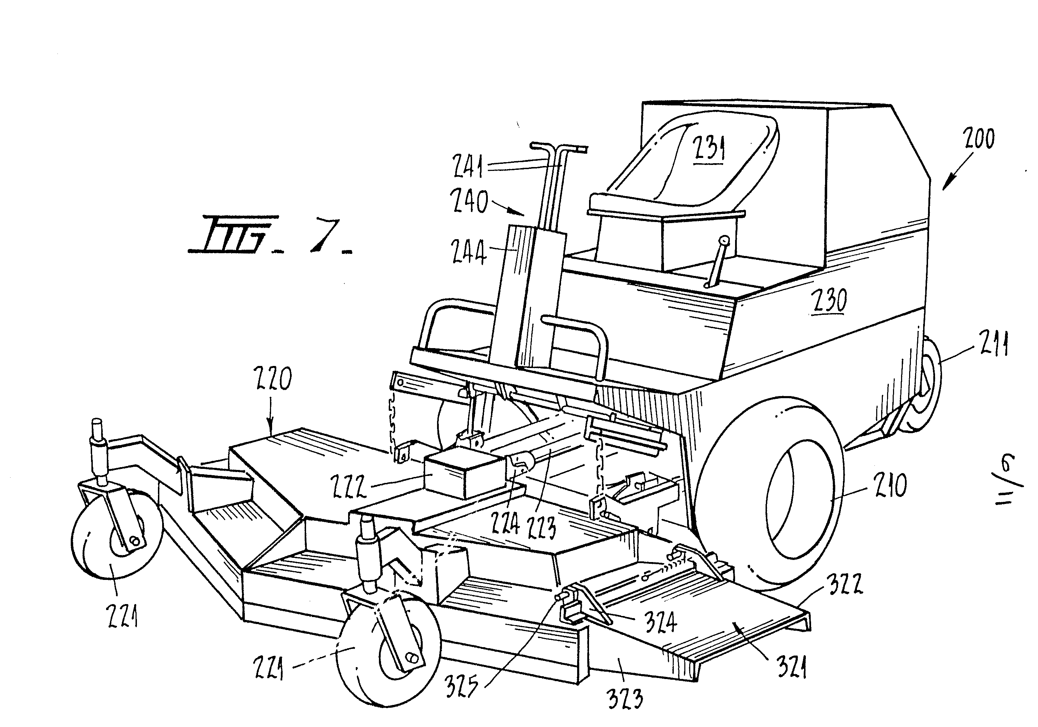

This can best be seen from Figs. 2 and 6.

As illustrated, the driving interconnection between the motor 60 and the gear box 83 can be by way of belts 62 and 73 or, alternatively, could be by means of a chain connection.

It is essential on mowers to be able to alter the cutting height and, thus, the height of the wheels relative to the plate or blade and this can be done either by moving the height of the wheels relative to the frame or, preferably, by varying the height of the cutting deck relative to the frame.

It will be appreciated that, with a mower of the type described, it would be difficult to provide a means whereby the height of the wheels relative to the frame can be varied, as the mower is relatively massive and it is preferred that the driving wheels 21 be permanently mounted.

However, if the cutting deck is moved upwardly and downwardly relative to the frame, problems can be encountered in the drive means.

The specific drive means used here can best be seen from Figs. 2 and 5, as, as previously described, belt 73 is connected between pulleys 72 and 84 and pulley 84 is on the input shaft of gear box 83.

In order to bring the belt 73 into and out of driving engagement with the pulleys, I provide an idler pulley assembly 100 which can comprise a pair of arms 101 which are pivotally mounted on a shaft 102 and which have idler rollers 103 pivotally connected therebetween.

An extension 104 carries a number of points of connection 105 to which a rod 106 or the like can be connected, which rod is, in turn, connected to one arm 107 of a bell crank which is mounted for rotation about a pivot 108 and the other arm 109 of which is in connection with the shaft 51 which is in connection with the control handle 50.

The arrangement is such that, when the handle 50 is moved from the position shown in Fig. 5, the bell crank moves in a clockwise direction about its pivot 108 and this causes the idler rollers 103 to come into contact with the top run of the belt 73, thus tensioning the belt to provide drive to the gear box 83.

There is, at this time, a second operation as cable 110 is caused to move forwardly and this cable is in connection by means of a spring 111 to a band brake 112 passing over a pulley 113 which pulley is coaxial with pulley 84.

The other end of the band brake 112 is connected to the shaft 102 to which the idler assembly 100 is pivotted.

Thus, as the idler assembly is engaged, there is a disengagement of the band brake 112 and this disengagement is positive as spring 114 moves the brake away from contact with its pulley.

When the lever 50 is moved back to its original position, as illustrated in Fig. 5, this causes cable 110 to be drawn forwardly, the tension of spring 111 overcomes the tension in spring 114 and the brake is applied.

This provides a substantial safety feature as, when the plate or blades are mot being positively driven, they are locked by the brake 112 and thus provide a safety feature for the user.

However, it will be appreciated that, for the drive mechanism to operate correctly, the tension of the belt 73 must be maintained within specific limits, as it must be sufficiently loose as to not effect driving when the idler assembly 100 is disengaged, but it must permit the assembly to be fully engaged and to permit the brake 112 to be released.

If the cutting deck simply moved upwardly and downwardly, then the tension in the belt could vary substantially over the range of movement of the cutting deck and it may well be that the drive arrangement is not fully satisfactory.

To provide an arrangement whereby the tension of belt 73 is substantially constant over the range of movements of the cutting deck, I mount the cutting deck relative to the frame by means of upwardly extending members 120 which are located at an angle from the normal and which are received in bearing members 121 are connected to the frame a corresponding angle.

The arrangement can well be seen from Figs. 2 and 6.

I may prefer to provide stop members 122 which pass through the members 120 and which control the maximum upward and downward movement of the cutting deck 80.

To physically move the cutting deck, I provide a pair of cables 123 the lower portions 124 of which are connected to eye lugs or the like 125 on the cutting deck and lie substantially parallel to the axes of the members 120. This is done by passing the cables over idler pulleys 126 which are forward of the eye lugs. The cable then passes rearwardly to a height adjustment means 130 which is best shown in Fig. 6.

This means comprises an operating lever 131 which, through a linkage shown generally at 132, moves a pair of arms 133 to the lower ends of which the cables 123 are connected.

Stop means are provided so that the handle portion 131 can be located in a number of required positions.

It can be seen that the mode of movement of the cutting deck relative to its bearings 121 closely approximates an arc having its centre at pulley 72 and its circumference at pulley 84. This is not strictly correct as, of course, the movement is linear, but over the number of degrees of movement concerned, it is a good first approximation.

Because of this, the tension in the belt 73 remains substantially constant over the permitted amount of movement of the cutting deck and thus the operation of the plate or the blades is unaffected regardless of the location of the cutting deck relative to the frame.

Overall, the tension in the belt 73 can be varied by adjustment of the location of the hydraulic motor 71, which may be necessary to adjust the tension of the chain 26. Further, the operation of the idler assembly 100 can be varied by altering the effective length of the rod 51 or by locating the rod 106 in the different points of connection 105.

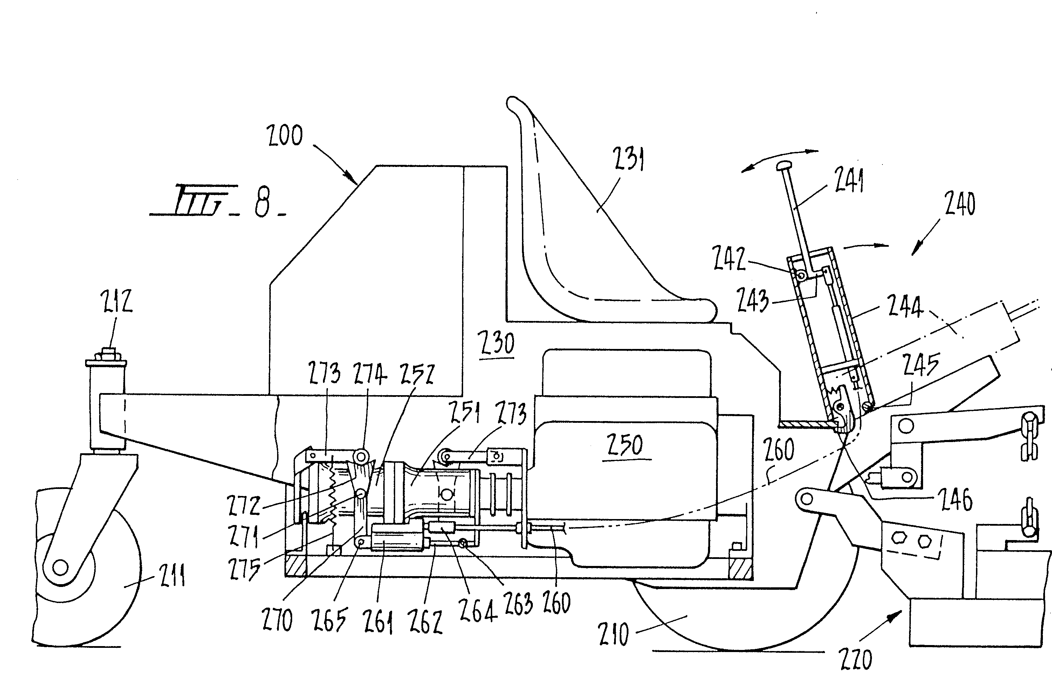

Referring now to the embodiment of Figs. 7 to 9, this illustrates a ride-on mower 200 having two front, driven wheels 210 and a rear, caster wheel 211, which wheel is mounted about a vertical axis 212 whereby the tail of the mower can follow the front when steered, as will be described later herein.

Mounted on the front of the mower is a cutter assembly 220 which will not be specifically described, except to say that this has a pair of front mounted caster wheels 221 which support the front of the mower but without restricting the manoeuvrability thereof and the mower plates or blades are driven through a gear box 222 which can be shaft driven by shaft 223 which is driven either directly or indirectly from the motor of the mower and which has a universal joint connection 224 to the gear box 222.

The mower basically has a body 230 on which is mounted a user's seat 231 which has associated therewith a control column 240, which will be described further herein later.

Mounted within the body there is a motor 250 which drives two hydraulic motors 251 and 252 which, in turn, each drive one of the road wheels of the mower.

The actual method of driving the road wheels can vary, but is preferably hydraulic, although the hydraulic motors could, if necessary, drive through gear boxes to a final mechanical drive means.

This embodiment has, in common with the first embodiment, a means whereby the hydraulic motors 251, 252 are normally held in their rest position, that is where there is no drive.

The drive to each of the motors is by means of cables 260, and the operation of these will be described hereinafter, but, effectively, these cables drive through a servo mechanism 261 which, again, will be described later herein.

The actual motor control is by means of a plate 270 which may directly control the motor through a shaft 271, to which it is pivotted, or may control the motor indirectly.

For the purpose of this description, I shall describe the control as being direct.

The plate has, at its upper end, a V formation 272 and, associated with the plate, there is a pivotally mounted arm 273 having a roller or the like 274 on its free end and which arm is biassed by a spring 275 so that it is in contact with the V-shaped recess at all times.

It will be seen that this arrangement acts in a manner similar to the recess 92 in the plate 91 of Fig. 4.

That is, when the arm 270 is rotated about its pivot 271, the roller 274 rides up one side of the V-shaped recess 272 increasing the tension on the spring 275 and thus there is a restoring force acting on the recess and, as soon as the positive pressure on the other end of the plate 270 is removed, it will be caused to move back to its rest position.

Thus, the plate 270 can be moved in either direction from its rest position causing a rotation of the associated wheel 210, either in a forward or reverse manner, but, as soon as the displacing force is removed, then the motor reaches a neutral situation and there is no force applied to the wheel.

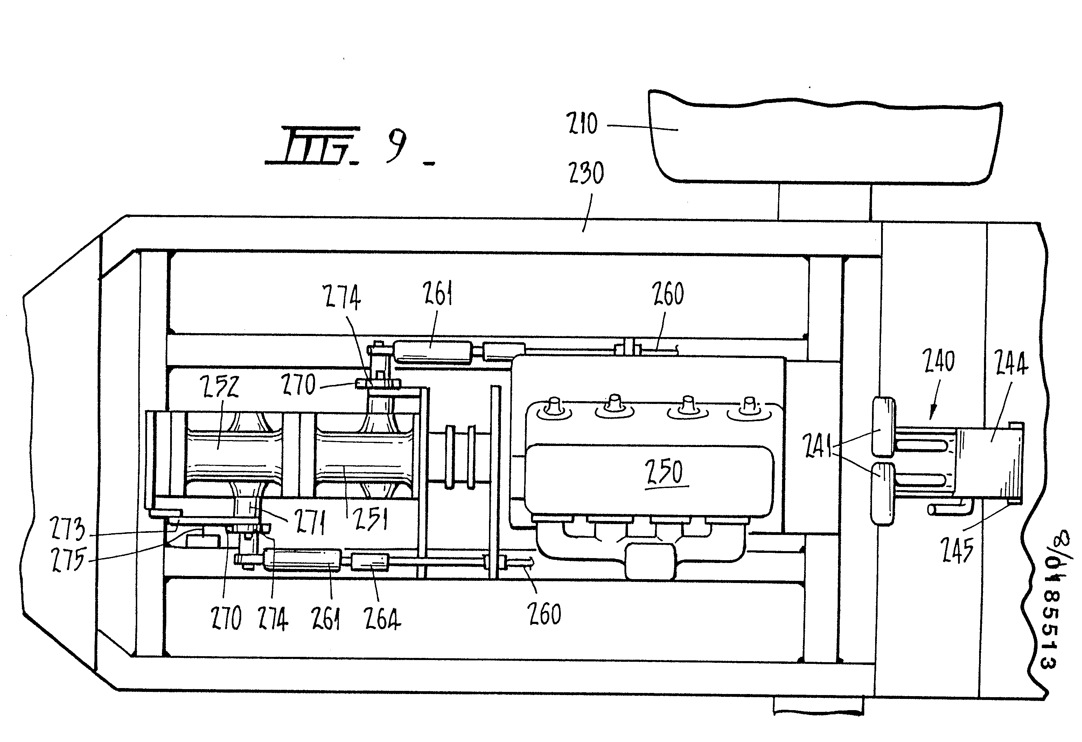

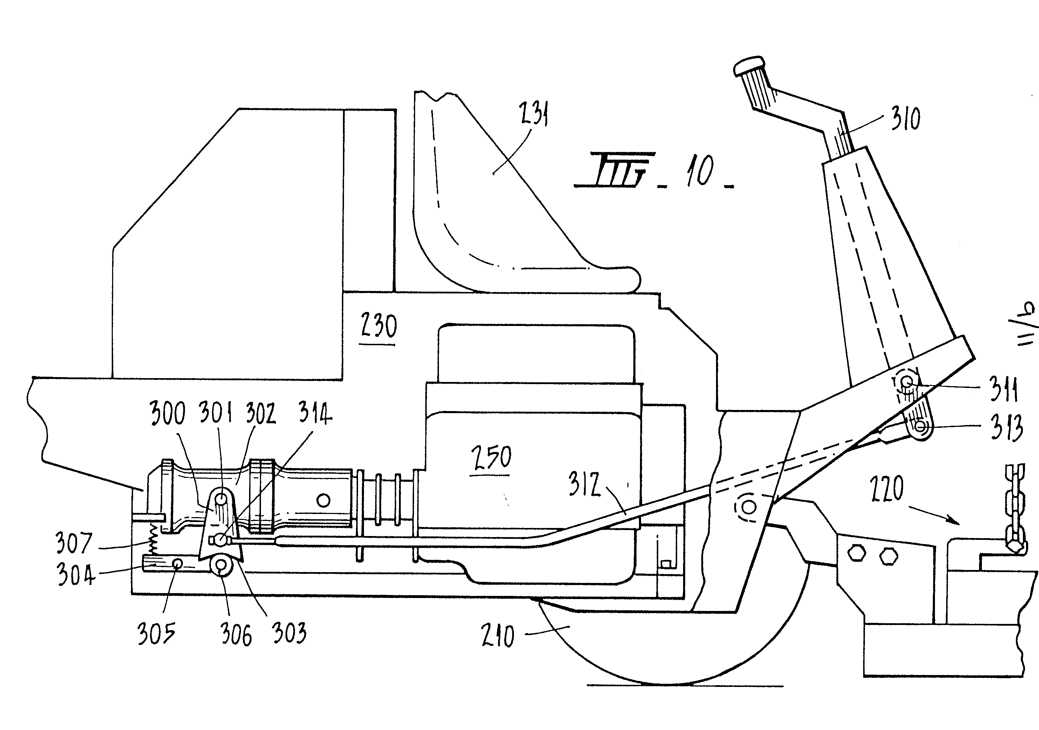

It will be seen, from Fig. 9 that the control means relative to the motors 251 and 252 are located on either side of the motor and thus the cables are of different lengths, but it will be seen that the operation is the same for each of these.

Referring to the servo arrangement 261, there is shaft 262 extending from the cylinder and which is pivotted at 263 to part of the body of the device.

A further piston has associated therewith an extending member 264 which is in connection with the cable 260. This cable can thus cause the member 264 to move forwardly and rearwardly which effects a similar movement to the piston associated therewith.

This movement controls the variation of the movement of fluid into the cylinder 261 and it is this movement of that between the two pivots 263 and 265 that actually causes the operation of the plate 270 and, thus, controls the hydraulic motor 252.

By providing this double control arrangement, it is possible to provide an adjustable flow valve, not illustrated, which controls the rate of operation of the servo valve on actuation of the cable 260 and thus the member 264.

Thus, where the control valve permits effectively unrestricted flow of fluid through to the cylinder 261, the operation can be extremely rapid, but, where the control valve restricts the flow of this fluid, then the operation can be slow.

This can serve two purposes.

Firstly the adjustable flow valve can be set to suit the competence of the user.

Thus, for a trainee or relatively unskilled user, the valve can be adjusted so the flow rate is relatively slow and thus the speed of reaction after the user commences a movement is slow and is relatively easily controlable. On the other hand, for a skilled user, the flow valve can be effectively opened so there is extremely rapid transmission of the desires of the user to the hydraulic motors and thus to the wheels.

Secondly, there may be applications where it is undesirable that there should be any rapid change in speed or direction and, in such circumstances, the adjustable flow valve can be so adjusted as to prevent such changes.

Whilst I have described the full operation of the control means, I have not described the way in which this operation is effected by a user.

The control console 240, previously referred to, has a pair of levers 241 which extend therefrom and each of which levers is in the form of a bell crank mounted for rotation about a pivot 242.

The free end of the second arm 243 is connected to a control member to which the cable member 260 is connected so that, as the control lever 241 is moved forwardly or rearwardly, as indicated by the arrows in Fig. 8, so the effective length of the cable 260 is increased or decreased, this change effecting directly the operation of the servo control system and thus the operation of the associated motor.

It can thus be seen that, where both the levers 241 are moved forwardly, the drives to each of the wheels 210 operate in a forward direction and the mower moves forwardly.

If one of the levers 241 is released, then the wheel associated therewith will stop rotating, the other wheel 210 will continue to rotate and the mower will turn in a circle.

If, on the other hand, one of the levers 241 is moved forwardly and the other is moved rearwardly, then the mower will rotate in a very small circle, which may be of the order of its own length.

Where both levers 241 are moved rearwardly, then the mower will move rearwardly.

The speed of operation is controlled by the distance the levers are moved, either forwardly or rearwardly.

It can thus be seen that, for a user, the actual physical control of the mower is basically very simple and, because of the availability of the adjustable flow valve, so the actual characteristics can readily be adjusted.

It will be seen that the casing 244 of the control column 240 is mounted on a pivot 245 and a latch 246 is provided to normally hold the control unit in the position illustrated in full line in Fig. 8.

In order to provide ready access by a user, the latch 246 can be released and the control column can be rotated about the pivot 245 so that it assumes a position equivalent to that shown in chain-dash in Fig. 8, that is so that it is completely clear from the operator.

Thus, the arrangement is such that, when a user is to seat himself on the mower, the control column is moved forwardly by releasing the latch 246 and rotating the column as illustrated in Fig. 8 and then move rearwardly so that the latch is engaged and the column assumes the position shown in Fig. 8, which is between the legs of the user and with the levers 241 in a position to be readily reached by a user.

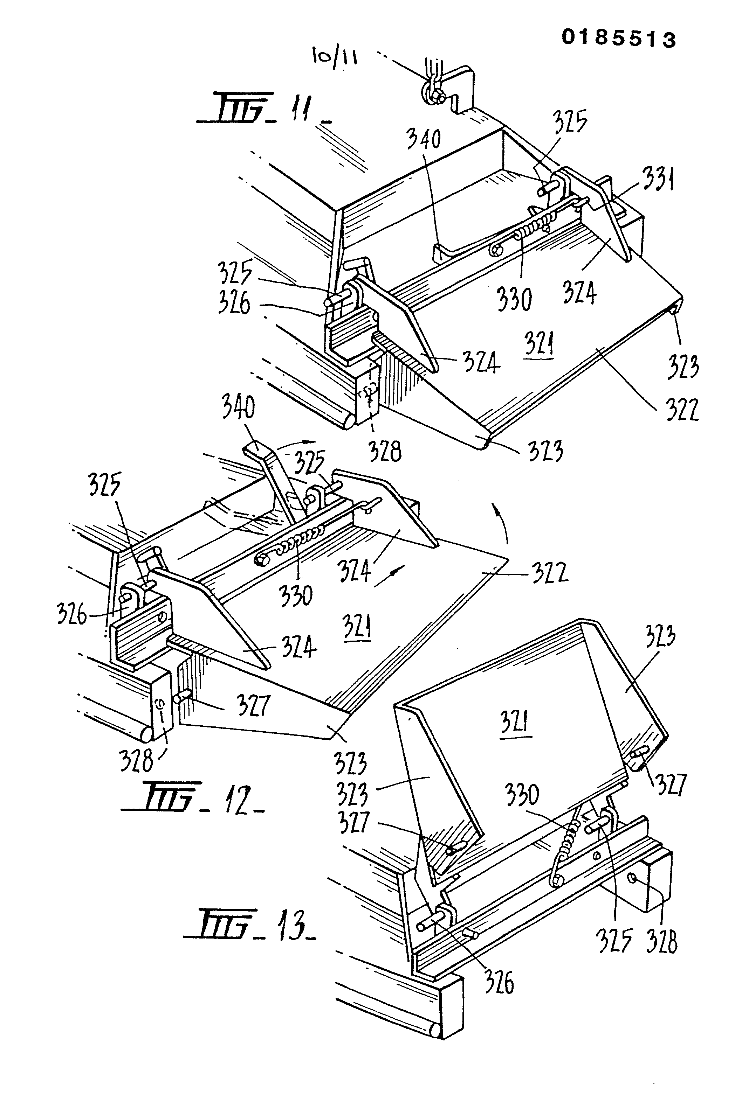

Referring briefly to the embodiment of Fig. 10, this embodiment can be considered to be largely similar to that of the embodiment of Figs. 7 to 9 except that the control means is purely manual and there is no servo valve in operation.

In this case there is a plate 300 attached to a shaft 301, which can directly effect the operation of the hydraulic motor 302, which plate extends downwardly and has, at its lower edge, a V-shaped recess 303.

Arms 304 pivotally mounted about a pivot 305 and having an idler wheel 306 between their free ends are spring biassed by a spring 307 so that the idler wheel is in contact with the recess 303 and thus, again, where the plate 300 is rotated from its rest position, there is a restoring force to return it to its rest position.

In this case the spring is shown as a compression spring and I can provide means whereby the compression of the spring, and thus the restoring force, can be varied.

In this arrangement the control is by means of a lever 310 mounted about a pivot 311 and which has a solid shaft 312 attached thereto at pivot 313, which shaft is pivotally connected at 314 to the plate 300 and can thus cause the plate to move about its pivot.

The overall operation of this embodiment can be considered to be identical to that of the earlier embodiment.

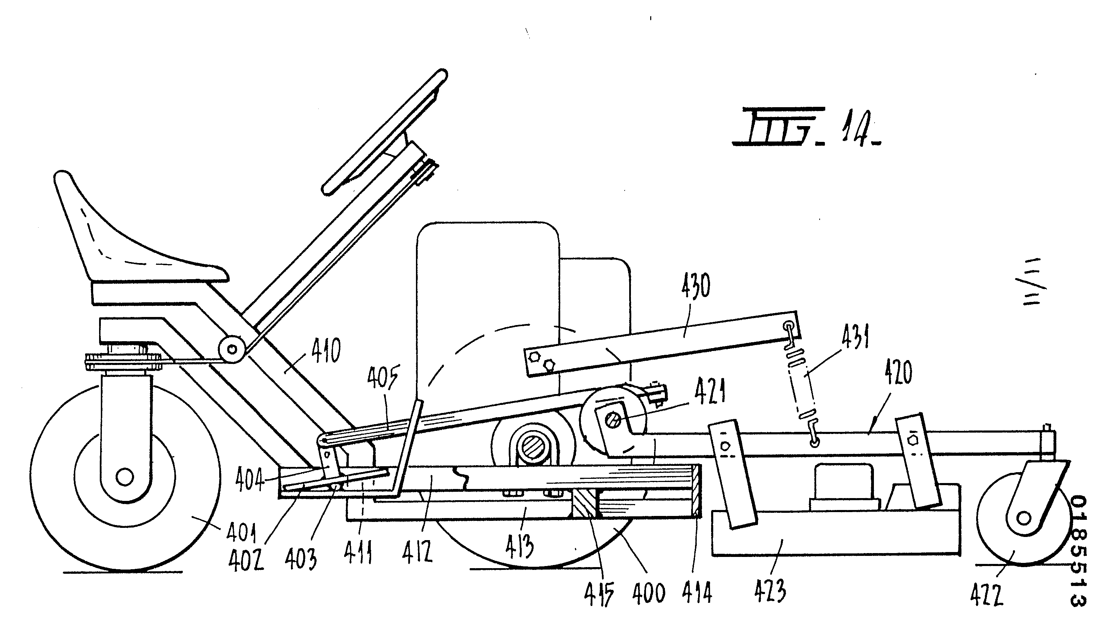

Figs. 11 to 13, I illustrate an output chute for a mower of the type of the embodiment of Figs. 7 to 9 or Fig. 10 and as illustrated as 220 in Fig. 7.

The chute body 321 is adapted to enclose the outlet from the mower and may be considered to have a downwardly directed upper surface 322 and a pair of substantially triangular side walls 323.

This arrangement ensures that any solid material struck by the blades of the mower tends to be deflected downwardly to the ground rather than to fly outwardly in an uncontrolled manner.

The chute has a pair of lugs 324 on the upper surface 322 which extend inwardly and have, on their inner ends, studs 325.

These studs pass through apertures in lugs 326 which are directly upwardly from part of the floor of the mower casing body.

The chute also has a pair of pins or the like 327 which are adapted to pass into holes 328 in part of the body.

The arrangement is such that, when the chute is to be attached to the body, it is moved onto the body transversely from one side thereof so the pins 325 and 327 enter the apertures 326 and 328 respectively and, when they are so located, a spring 330 located on the body is attached to an eye or the like 331 on the chute, thus causing the chute to adopt a position where the pins are fully engaged.

A lever 340 is provided which can cause the chute to be able to be moved against the spring tension and, in a first application, this movement is adapted to be such that the pins 327 can disengage their associated apertures 328 and the chute 321 can be rotated about the pins 325 to a rest position, as illustrated in Fig. 13.

Thus, say, when the mower is being simply driven from site to site, the chute can be raised into its rest position so that it does not extend substantially beyond the width of the mower.

The arrangement has a second advantage.

That is, when the chute is in use, in the position illustrated in Fig. 11, then, should it strike an obstruction it can move against the spring 330 until all four pins 325 and 327 are free from their corresponding apertures, at which time the chute will either drop away from the mower or will be held only by the spring 330, which will normally enable it to become disengaged, without damage, from the obstruction which had been struck.

Referring lastly to Fig. 14, this shows an alternative type of mower having a pair of driven front wheels 400 and a single rear caster wheel 401, which can be steered.

In order to drive this form of mower, it is necessary to cause the wheels 400 to be driven together forwardly or rearwardly as they can be mounted on a fixed axle and be chain driven or driven by a hydraulic motor or in any other way.

The feature that this embodiment has in common with the embodiment of the earlier inventions is that the control is such that, under normal conditions, the hydraulic motor which provides the motive power for the wheels 400 automatically adopts a neutral position.

In this case I provide a foot pedal 402 which is mounted about a pivot 403 and which has an upwardly extending arm 404 which is pivotally mounted to a link 405 which, in turn, is associated with a further linkage portion.

The arrangement of the operation of this linkage can be considered identical to the operation of the assembly shown in Fig. 4 in respect of the first embodiment, that is that the linkage causes movement of a plate which directly or indirectly controls the operation of an hydraulic motor which, in turn, drives the wheels and which plate has a V-shaped recess in which a roller mounted on a spring loaded plate is located.

The arrangement thus is such that when the pedal 402 is moved in a forward direction, or clockwise direction as shown in Fig. 14, then the plate similar to plate 91 of Fig. 4 will be rotated in a first direction which will cause operation of the hydraulic motor in a particular direction and the mower will move forwardly. If the pressure is removed from the foot pedal, the force provided by an idler wheel equivalent to wheel 93, will cause the plate equivalent to plate 91 to return to its rest position and the mower will stop.

When the pedal 402 is moved in the opposite direction, so the opposite operation occurs and the mower moves in reverse.

It will be seen that this mower has the same features of safety as far as the controlling of the forward and rearward movement as do the other mowers described.

This embodiment also has a further feature which is of substantial importance.

Mowers of this type are relatively light and, in order to maintain traction, it would be desirable that a substantial percentage of the weight lie over the wheels 400. However, as can be seen, the driver is physically located substantially above the rear caster wheel 401.

However, by an arrangement of the seat frame, I transfer the weight of the driver to the front wheel.

This is done by forming the seat frame of a number of members which include a downwardly and forwardly directed member 410 which is connected to a member 411 which passes between the main chassis members 412 and which, at its lower end, is connected to a forwardly directed member 413.

This member lies, as can be seen, below the chassis members 412 but between these members.

It will be noted that the former Figure is such that the chassis member 412 is shown as broken part way along its length so that, on the left side of the Figure, one is looking at the outer chassis member and, on the right side of the Figure, one is looking at the inner chassis member.

The seat member 413 extends forwardly to the front of the mower and is there connected to a plate 414 which is also connected to each of the chassis members 412.

Substantially below the wheels 400 the forwardly directed member 413 is also connected to the chassis members 412 by blocks 415.

This arrangement is such that there is a turning force about the front plate 414 which is caused by the weight of the driver and this turning force acts to give a downward pressure on the wheel 400, thus increasing the traction available in the unit.

Traction is further increased by the arrangement of the cutter assembly 420.

This assembly is generally pivotally connected at 421 about the axis of the pump and has forwardly mounted caster wheels 422.

The cutting deck 423 is adjustably mounted on the arms 420 to provide variations in the height of the unit.

Provided on the unit and attached indirectly to the chassis 412 thereof, there is a forwardly directed arm 430.

This arm is connected by a spring 431 to the arm 420 and part of the weight of the cutting deck 423 is carried by this spring.

This is, itself, returned to the chassis over the wheel 400 and, again, assists in increasing the loading on the wheel and thus increases the traction gained by the wheel.

It can be seen that, by this arrangement, the total unit can be made very light, but, at the same time, there can be substantial loading on the wheel 400 and this permits good traction, even in adverse conditions.

It will be appreciated that, whilst I have described several embodiments of mower made in accordance with the invention, these can be varied without departing from the spirit and scope of the invention as defined in the attached claims. Specifically, where I have shown a mechanical drive to the cutter blades, a hydraulic drive could be used.

CLAIMS:

1.  A mower of the self propelled type having a control means whereby the operator can effect the control of the movement of the mower characterised in that the control means is biassed (91,95,96) to a neutral, or non-operative condition whereby, if the operator releases the control means, the drive of the mower is rendered inoperative.

2.  A mower as claimed in claim 1 wherein there is an operating handle (45) located at a position easily reached by an operator, which handle has at least one mode of operation whereby, on displacement of the handle, drive of the mower is initiated, the handle being biassed so that, when it is released, the drive is removed.

3.  A mower as claimed in claim 2 wherein the handle has two modes, one being to cause the mower to move forwardly, the other being to cause the mower to reverse, the modes being selected by different displacements of the handle (45), the arrangement being that, regardless of which mode is used, the handle is biassed so that, when it is released, the drive is removed.

4.  A mower as claimed in claim 2 or claim 3 wherein the mower is a walk-behind mower and when the operating handle (45) is located so as to be able to be grasped by an operator whilst controlling the steering of the mower and wherein the operating handle (45) extends across a substantial part of the width of the mower and is pivotally mounted (47) substantially at its centre, control being effected by selectively moving one side towards the operator.

5.  A mower as claimed in claim 2 or claim 3 wherein the mower is a ride-on mower and wherein the operating handle (241) extends upwardly adjacent an operator, when seated, control being effected by selectively moving the operating handle in a substantially vertical plane.

6.  A mower as claimed in claim 5 wherein the operating handle (241) is located for part rotational movement in a casing, the casing (244) being hingedly mounted (245) at its lower end to be moveable from a position at which it extends upwardly adjacent the operator to a position spaced therefrom to permit easy ingress and egress by the operator.

7.  A mower as claimed in any preceding claim wherein the control means has attached thereto or associated therewith a plate (91) or the like having formed therethrough a recess which includes two surfaces inclined to each other and a means (93) biassed towards the surfaces, the arrangement being such that, on movement of the control means, the plate (91) is caused to move so that the means biassed towards the surfaces rides upon one surface and applies a restoring force to the plate.

8. A mower as claim in claim 7 wherein the means biassed towards the surface includes a roller (93) adapted to roll along the surface so as to cause little resistance to the movement of the plate.

9. A mower as claim 8 wherein the roller is on an arm (94) pivotally connected (95) to part of the roller and biassed towards the plate.

10. A mower as claimed in claim 9 wherein the arm is biassed by a spring (96)

11. A mower as claimed in claim 10 wherein the tension in the spring is adjustable.

12. A mower as claimed in any preceding claim wherein there is a servo mechanism (261) located between the operator actuated part of the control means and the part of the control means which effects the movement of the mower.

13. A mower as claimed in claim 12 wherein the servo mechanism is hydraulic and wherein means are provided to control the rate of output of the servo mechanism relative to the rate of inlet thereto, which means result in changes in the operation of the control means.

14. A mower as claimed in claim 1 wherein the drive means for the mower blades is achieved from a motor (60) and wherein means (100) are provided to selectively engage or disengage the drive means, the said means also causing actuation of a brake (112) when the drive means is disengaged and disengagement of the brake when the drive means is engaged.

15. A mower as claimed in claim 14 wherein the drive is by means of belts (62,73) and wherein the engagement of the drive means is achieved by using idler pulleys (103) or the like to increase the tension in the belt and thus the frictional engagement between the motor and the means driving the blades.

16. A mower as claimed in claim 14 or claim 15 wherein the brake is a band brake (112) which passes over a drum (113) on the shaft associated with the drive to the blades and which is normally biassed away from contact with the drum but is brought into contact with the drum (113) on disengagement of the drive means.

17. A mower as claimed in claim 2 or claim 3 wherein the mower is a ride-on mower and wherein the control means is a foot pedal (402) mounted for partial rotation about a pivot, rotation in one direction effecting movement in one sense and in the other, in the other sense.

18. A mower as claimed in claim 5 wherein there are two control means, each of which controls the movement of one wheel, the control also providing control for the steering of the mower.

19. A mower as claimed in claim 1 wherein the cutting deck (80), which carries the cutting blades of the mower is mounted for movement relative to a frame (20) of the mower and wherein this movement is such as to ensure that the length of the drive train remains substantially constant regardless of the height of the cutting deck.

20. A mower as claimed in claim 19 wherein the cutting deck (80) has a number of upwardly extending members (120) which are located at an angle from the normal and which are received in bearing members (121) at a corresponding angle so that the cutting deck moves upwardly and downwardly whilst remaining in a horizontal plane whilst the length of the drive train remains constant.

21. A mower as claimed in claim 20 wherein the cutting blades are belt (73) driven and wherein the straight line movement of the drive axis and the cutting deck approximates an arc centred at the drive pulley (72) over the distance of movement permitted.

22. A mower as claimed in claim 1 having a discharge chute (321) which is connected to the cutting deck (220), the chute having at least two forwardly extending horizontal studs (325) which are adapted to enter apertures on the cutting deck, from the rear thereof, and means (330) whereby tension is applied to the discharge chute so that, in normal operation, it extends about a discharge opening but, on striking an obstruction, can move rearwardly until the studs leave the apertures, at which time it becomes free.

23. A claim as claimed in claim 22 wherein there are four forwardly extending studs (325,327) in two coaxial pairs, the lower studs being shorter than the upper studs, whereby, on a partial rearward movement of the chute relative to the cutting deck, the lower studs are freed from their apertures and the chute can be rotated about the upper studs to a transport position.

24. A mower as claimed in claim 22 or claim 23 wherein the chute is maintained in its operative position by spring loading (330).

25. A mower as claimed in claim 1 wherein the mower is a ride-on mower and wherein the mower is front wheel (402) driven, the operator's seat being directly connected by way of forwardly extending members (410,411,413) to a position adjacent the front of the mower whereby the weight of the operator tends to act against the front, driven wheels (402)

26. A mower as claimed in claim 25 wherein the seat frame is located parallel to the chassis of the mower and extends forwardly to the front end (413) of the chassis thereof and, at that end, is interconnected (404) with the chassis (412) of the mower.

27. A mower as claimed in claim 26 wherein the forwardly directed member of the seat assembly is also connected (415) to the chassis of the vehicle substantially beneath the front, driven wheels.

28. A mower as claimed in claims 25 to 27 wherein the cutting deck (420) of the mower extends forwardly from the front end thereof and is pivotally connected (421) to the mower at the front end thereof, the cutting deck having at least one caster wheel (422) on the forward end thereof, characterised in that an arm (430) extending forwardly from the body of the mower and above the cutting deck is connected to the cutting deck by means of a spring (431) whereby at least part of the weight of the cutting deck is transmitted to the mower at a position at which it reacts with the front, driven wheels.

FIG. 1

0185513

_FIG. 2._

0185513

2/11

FIG. 4.

FIG. 3.

3/11

0185513

FIG_5.

4/11

0185513

FIG. 6

FIG. 7.

_Fig_ 8

FIG. 9.

FIG. 10.

231
310
230
300 301 302 314
250
312
311
313
220
307
304
305 306 303
210

9/11

0185513

FIG_11_

340

325

331

325
326

330    324

324    321    323

321

323    322

340

325

325

326    330    324    322

324    321

327

328

323
323
327

321

323

330

327

325    328

FIG_12_

326

FIG_13_

_FIG. 14_

430

431

420

421

410

405

404

401

402

403

411

412

413

415 400 414 423

422

0185513

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 85309035.5 |
| X | <u>DE - A1 - 2 728 584</u> (QUECK, KURT)<br><br>* Claims 3,5; page 3, lines 9-18 * | 1 | A 01 D 34/00<br>A 01 D 34/63<br>A 01 D 34/68 |
| X | <u>DE - B - 1 259 033</u> (HOOVER LIMITED)<br><br>* Column 3, lines 15-19; column 5, lines 32-41; column 10, lines 48-68; column 12, lines 4-25; claims 1,10; fig. 13 * | 1,2 | |
| A | <u>US - A - 3 229 452</u> (K.N. HASEN-BANK)<br><br>* Fig. 1,5,9 * | 1 | |
| A | <u>DE - A1 -2 626 201</u> (STAHLSCHMIDT KG)<br><br>* Claim 1 * | 1 | **TECHNICAL FIELDS SEARCHED (Int. Cl.4)**<br><br>A 01 D 34/00 |
| A | <u>DE - A1 - 2 617 460</u> (WOLF-GERÄTE GMBH)<br><br>* Page 11 * | 1 | |
| A | <u>DE - A - 2 117 547</u> (DEERE & CO) | | |
| A | <u>US - A - 3 942 604</u> (CHARLES E. BLACK) | | |

The present search report has been drawn up for all claims

| Place of search | Date of completion of the search | Examiner |
|---|---|---|
| VIENNA | 27-02-1986 | MENTLER |